Europäisches Patentamt

European Patent Office

Office européen des brevets

(11) Publication number: **0 243 201 B1**

(12) **EUROPEAN PATENT SPECIFICATION**

(45) Date of publication of patent specification: **29.04.92**  (51) Int. Cl.⁵: **C01F 5/14**, C08K 9/04

(21) Application number: **87303646.1**

(22) Date of filing: **24.04.87**

(54) **Coated magnesium hydroxide.**

(30) Priority: **24.04.86 GB 8610067**

(43) Date of publication of application:
**28.10.87 Bulletin 87/44**

(45) Publication of the grant of the patent:
**29.04.92 Bulletin 92/18**

(84) Designated Contracting States:
**DE FR IT NL**

(56) References cited:
**EP-A- 0 052 868**
**US-A- 4 098 762**
**US-A- 4 145 404**

**PATENT ABSTRACTS OF JAPAN vol. 2, no. 144, 30th November 1978;**

**PATENT ABSTRACTS OF JAPAN vol. 3, no. 19 (C-37), 17th February 1979;**

**PATENT ABSTRACTS OF JAPAN vol. 2, no. 89, 21st July 1978;**

**PATENT ABSTRACTS OF JAPAN vol. 2, no. 117, 29th Sepetember 1978;**

(73) Proprietor: **Steetley Ouarry Products Limited**
**PO Box 53 Brownsover Road**
**Rugby Warwickshire CV2I 2UT(GB)**

(72) Inventor: **Watson,Colin Lloyd**
**6 Church Street,Heathtown**
**West-Midlands(GB)**
Inventor: **Hornsby,Peter Ridsdale**
**31,Manor Way Chesham**
**Bucks(GB)**
Inventor: **Holloway,Leslie Redman**
**32 Orchard Drive**
**Durham(GB)**

(74) Representative: **Hardisty, David Robert et al**
**BOULT, WADE & TENNANT 27 Furnival Street**
**London EC4A IPO(GB)**

## Description

The present invention relates to magnesium hydroxide filler for plastics materials and to plastics compositions containing magnesium hydroxide.

Magnesium hydroxide is well known as a filler for plastics compositions. It is, however, frequently observed that in increasing the inorganic filler content of plastics materials the flexural modulus of the plastics material increases but the impact strength decreases.

Various proposals have been made for treating the magnesium hydroxide to make it more suitable for incorporation into plastics materials as a filler.

US-A-4145404 discloses a magnesium hydroxide having a crystallite size in the 101 direction of more than 800 Å and a specific surface area determined by the BET method of less than 20m$^2$/g. The magnesium hydroxide may be treated with an anionic surface active agent to form solid particles of magnesium hydroxide coated with the surfactant. This form is preferred, for example, as a fire-retarding filler for thermo-plastics resins. The surfactant may be, for example, an alkoxy metal salt of a higher fatty acid containing 8-30 carbon atoms, or an alkyl sulphyle salt of an alkaline metal, again containing 8-30 carbon atoms. Specific examples of surface active agents are sodium stearate, sodium oleate and potassium laurate. The manufacture of polypropylene filled with magnesium hydroxide coated with sodium stearate is disclosed. The filler forms about 55 % of the total weight of the composition. The polypropylene has an impact strength of 5.2 Kg cm/cm or 3.12 J/mm, which is too low for many applications.

GB-A-1510237 discloses an inorganic filer for synthetic plastic resins which comprises particles of an inorganic compound coated with a fatty acid ester of an polyhydricalcohol of the Neopentile series. Suitable alcohols are pentaerythritol and trimethylopropane. The filler may be magnesium hydroxide or aluminium hydroxide for example.

The increase in flexural modulus is usually a desirable feature but the accompanying reduction in impact strength is a severe disadvantage.

However, in some instances a filler is used because it has functional properties that are exhibited only at high solids loadings, i.e. above the point at which the deterioration in impact strength becomes unacceptable. An example is the use of magnesium hydroxide filler in order to impart flame retardance and smoke suppressance to plastics components. For this purpose magnesium hydroxide needs to be used at high loadings, typically between 100 and 200 parts by weight per 100 parts of plastics material and hence resultant plastics mouldings tend to be brittle and lack strength.

It has now been found that if the inorganic filler is a coated magnesium hydroxide of the type hereinafter defined the reduction in impact strength is not so severe.

According to the present invention there is provided a flame resistant and smoke suppressed plastics composition which comprises a polyolefin or a polyamide having dispersed therein magnesium hydroxide having a crystallite size of less than 500 Å (measured by X-ray line broadening) which crystallites form primary particles having a median size of from 1.5 to 10 $\mu$m and whose surface area is more than 10 m$^2$/g and which primary particles have been wetted and coated with a salt or an amide of an organic acid said organic acid containing from 6 to 25 carbon atoms.

Preferably the salt of the organic acid is the salt of an alkali metal, preferably sodium or potassium, or the salt of an alkaline earth metal, preferably calcium or magnesium. The amide may be formed from an amine containing less than ten carbon atoms, preferably containing six or less carbon atoms for example two, three or four carbon atoms.

Preferably the organic acid contains from 6 to 22 carbon atoms. Typical suitable organic acids, from which the salt, or amide may be derived, are aliphatic carboxylic acids, aromatic carboxylic acids, rosin and rosin derivatives, cycloaliphatic acids and the like. Preferred acids are stearic, lauric and palmitic acids and it is preferred that these are used in the form of their salts.

The magnesium hydroxide of the present invention is characterised by its small crystallite size and high surface area. The dimensions of the crystallites, as measured by X-ray line broadening, are less than 500 Å preferably between 100 and 400 Å. Tightly bound clusters of these crystallites form primary particles with median sizes between 0.5 and 10 $\mu$m, preferably between 0.8 and 5 $\mu$m. However the surface area, as measured by the BET method, is much higher than would be calculated from the particle size dimensions, reflecting more the composite crystallite structure of the particles. The surface area of the magnesium hydroxide is desirably more than 10m$^2$/g, typically 20 to 50m$^2$/g.

The magnesium hydroxide may be made by treating a magnesium bearing solution, such as brine or sea water, with an alkali, most commonly either lime or slaked lime, dolomitic lime or slaked dolomitic lime or caustic soda. It is part of the process that a proportion of the resulting settled slurry is returned to the reaction vessels so as to increase by 5 to 20 times the concentration of magnesium hydroxide in the reaction vessels. The magnesium hydroxide so obtained has the characteristics as described above. The present invention, however, would apply to any magnesium hydroxide product that was not produced by this route but which had the described morphology.

At high loadings it has surprisingly been found that, far from reducing the impact strength of the plastics compostion, the presence of magnesium hydroxide as herein defined increases the impact strength. Moreover, desirable high values of flexural modulus are still retained to a level substantially above that of the unfilled plastics material.

According to a further aspect of the present invention there is provided a process for modifying the surface characteristics of magnesium hydroxide which comprises heating with agitation a mixture comprising magnezium hydroxide having a crystallite size of less than 500 Å (measured by X-ray line broadening) which crystallites form primary particles having a median size of from 0.5 to 10 $\mu$m and whose surface area is more than $10m^2/g$ and a salt of an organic acid or an amide thereof said organic acid containing from 6 to 25 carbon atoms in order to wet and coat the surface of the magnesium hydroxide particles.

The mgnesium hydroxide is suitably heated to a temperature in the range of 50° to 200°C, the preferred temperature depending on the choice of coating agent.

The plastics materials are polyolefines such as polyethylene and polypropylene, or polyolefine copolymers such EVA co-polymer, other plastics materials include polyamides for example nylon-6 and nylon 6.6.

The amount of magnesium hydroxide in the plastics composition may vary from 5% by weight to 70% by weight, eg. 50 to 70% by weight.

The actual amount of treated magnesium hydroxide present in the plastic composition will depend on the purpose for which the magnesium hydroxide is used, but the effect on impact strength will be more noticeable at higher weight loadings.

Therefore in a preferred embodiment of the present invention a flame resistant and smoke suppressed plastics composition comprises 50% to 70% by weight of coated magnesium hydroxide as hereinbefore described based on the weight of the plastics material.

Desirably the percentage by weight of salt or amide based on the weight of magnesium hydroxide is in the range 5 % to 15 %.

The following example illustrates the present invention:-

## EXAMPLE 1

2 kg of dried sea water magnesium hydroxide, of median crystallite size 250A, of median particle size 3 $\mu$m and having a surface area of $35m^2/g$ was mixed with 0.2 kg of magnesium stearate in a high speed mixer at 3500 rpm for a period of twenty minutes, the temperature being allowed to rise to 160°C. A product was obtained in which the particles of magnesium hydroxide were well wetted and uniformly coated with magnesium stearate.

2 kg of powdered polypropylene homopolymer was then added to the mixer and blended with the filler for five minutes at 3500 rmp. The resulting powder pre-mix was subsequently melt compounded at approximately 220°C in a high intensity co-rotating intermeshing twin-screw extruder and the cooled strand extrudate pelletised. These pellets were then injection moulded to produce 6 mm thick test plaques.

The falling weight impact strength of the plaques was measured at 23°C, and was greater than 15 J/6 mm while their flexural modulus was 2.1 GPa. Corresponding measured values for the unfilled polypropylene were 7.7 J/6 mm and 1.0 GPa respectively. For polypropylene containing untreated magnesium hydroxide filler pre-mixed and extruded with the polymer at the same loading (2 kg $Mg(OH)_2$ + 2 kg PP) and in the way described above, the result obtained for impact strength was 2.1 J/6 mm and that for flexural modulus, 3.5 GPa.

Additionally, the polypropylene compound containing treated magnesium hydroxide filler showed good flame retardant and smoke suppression properties. Compared to unfilled polypropylene, the limiting oxygen index was increased from 17.4 to 23.4 whilst the rate of flame spread was reduced from 2.7 cm $min^{-1}$ to 1.5 cm $min^{-1}$. Corresponding values for polypropylene containing uncoated magnesium hydroxide filler (2 kg $Mg(OH)_2$ + 2 kg PP) were 24.6 for limiting oxygen index and 1.8 cm $min^{-1}$ for flame spread.

Polypropylene filled with 50% by weight of coated magnesium hydroxide gave a smoke obstruction value of $0.03m^2g^{-1}$, compared with 0.14 $m^2g^{-1}$ for unfilled polymer, as determining according to UITP method E4.

## EXAMPLE 2

Example 1 was repeated using 0.12 kg of lauramide in place of magnesium stearate and allowing the temperature to rise to only 130°C during mixing. The falling weight impact strength of the plaques at 23°C was 6.2 J/6 mm and the flexural modulus was 2.7GPa.

## EXAMPLE 3

Example 2 was repeated using stearamide in place of lauramide. The impace strength was again 6.2 J/6mm and the flexural modulus was 2.9 GPa.

## Claims

1. A process for modifying the surface characteristics of magnesium hydroxide which comprises heating with agitation a mixture comprising magnesium hydroxide having a crystallite size of less than 500 Å (measured by X-ray line broadening) which crystallites form primary particles having a median size of from 0.5 to 10 $\mu$m, and whose surface area is more than 10 m$^2$/g and a salt of an organic acid or an amide thereof said organic acid containing from 6 to 25 carbon atoms in order towet and coat the surface of the magnesium hydroxide particles.

2. A process as claimed in claim 1 wherein the surface area of the magnesium hydroxide is from 20 to 50 m$^2$/g.

3. A process as claimed in claim 1 or claim 2 wherein the magnesium hydroxide has a crystallite size of from 100 to 400 Å.

4. A process as claimed in any one of claims 1 to 3 wherein the crystallites form primary particles having a median size of from 0.8 to 5 $\mu$m.

5. A process as claimed in any one of claims 1 to 4 wherein the mixture is heated to a temperature in the range of 50° to 200°C.

6. A process as claimed in any one of the preceding claims wherein the percentage by weight of the salt or amide which forms the coating, is 5 to 15 % by weight based on the weight of magnesium hydroxide.

7. A process as claimed in any one of the preceding claims wherein the organic acid is stearic, lauric or palmitic acid.

8. A flame resistant and smoke suppressed plastics composition which comprises a polyolefin or a polyamide having dispersed therein magnesium hydroxide having a crystallite size of less than 500 Å (measured by X-ray line broadening) which crystallites form primary particles having a median size of from 0.5 to 10 $\mu$m, and whose surface area is more than 10 m$^2$/g and which primary particles have been wetted and coated with a salt or an amide of an organic acid said organic acid containing from 6 to 25 carbon atoms.

9. A flame resistant and smoke suppressed plastics composition which comprises a polyolefin of a polyamide having dispersed therein primary particles of magnesium hydroxide prepared by a method of any one of claims 1 to 8.

10. A plastics composition as claimed in claim 8 or claim 9 wherein the percentage weight of the magnesium hydroxide in the plastics composition based on the total weight of the composition is from 5 to 70 %.

11. A plastics composition as claimed in claim 10 wherein the percentage by weight of magnesium hydroxide is from 50 to 70 %.

## Revendications

1. Procédé de modification des caractéristiques de surface de l'hydroxyde de magnésium, qui consiste à chauffer sous agitation un mélange comprenant de l'hydroxyde de magnésium ayant des cristallites d'un diamètre inférieur à 500 Å (mesuré par élargissement des raies du spectre de rayons X), cristallites qui forment des particules primaires ayant un diamètre moyen de 0,5 à 10 $\mu$m et dont la surface spécifique est supérieure à 10 m$^2$/g, et un sel d'un acide organique ou d'un amide de cet acide, ledit acide organique contenant 6 à 25 atomes de carbone, afin de mouiller et revêtir la surface des particules d'hydroxyde de magnésium.

2. Procédé suivant la revendication 1, dans lequel la surface spécifique de l'hydroxyde de magnésium est comprise dans l'intervalle de 20 à 50 m$^2$/g.

3. Procédé suivant la revendication 1 ou la revendication 2, dans lequel l'hydroxyde de magnésium possède un diamètre de cristallites de 100 à 400 Å.

4. Procédé suivant l'une quelconque des revendications 1 à 3, dans lequel les cristallites forment des particules primaires ayant un diamètre moyen de 0,8 à 5 $\mu$m.

5. Procédé suivant l'une quelconque des revendications 1 à 4, dans lequel le mélange est chauffé à une température comprise dans l'intervalle de 50° à 200°C.

6. Procédé suivant l'une quelconque des revendications précédentes, dans lequel le pourcentage en poids du sel ou de l'amide qui forme le revêtement est compris dans l'intervalle de 5 à 15 % en poids, sur la base du poids de l'hydroxyde de magnésium.

7. Procédé suivant l'une quelconque des revendications précédentes, dans lequel d'acide organique est l'acide stéarique, laurique ou palmitique.

8. Composition de matières plastiques ininflammable et sans émission de fumée, qui comprend une polyoléfine ou un polyamide dans lequel est dispersé de l'hydroxyde de magnésium ayant des cristallites d'un diamètre inférieur à 500 Å (mesuré par élargissement des raies du spectre de rayons X), cristallites qui forment des particules primaires ayant un diamètre moyen de 0,5 à 10 $\mu$m et dont la surface spécifique est supérieure à 10 m$^2$/g, particules primaires qui ont été mouillées et revêtues d'un sel ou d'un amide d'un acide organique, ledit acide organique contenant 6 à 25 atomes de carbone.

9. Composition de matières plastiques ininflammable et sans émission de fumée, qui comprend une polyoléfine ou un polyamide dans lequel sont dispersées des particules primaires d'hydroxyde de magnésium préparées par un procédé suivant l'une quelconque des revendications 1 à 8.

10. Composition de matières plastiques suivant la revendication 8 ou la revendication 9, dans laquelle le pourcentage en poids de l'hydroxyde de magnésium dans la composition de matières plastiques, sur la base du poids total de la composition, est compris dans l'intervalle de 5 à 70 %.

11. Composition de matières plastiques suivant la revendication 10, dans laquelle le pourcentage en poids de l'hydroxyde de magnésium est compris dans l'intervalle de 50 à 70 %.

**Patentansprüche**

1. Verfahren zum Modifizieren der Oberflächeneigenschaften von Magnesiumhydroxid, umfassend das Erhitzen unter Rühren eines Gemisches, umfassend Magnesiumhydroxid, mit einer Kristallitgröße von weniger als 500 Å (gemessen durch Röntgenlinien-Verbreiterung), wobei die Kristallite primäre Teilchen mit einer mittleren Größe von 0,5 bis 10 $\mu$m bilden, und deren spezifische Oberfläche mehr als 10 m$^2$/g beträgt, sowie ein Salz einer organischen Säure oder ein Amid davon, wobei die organische Säure 6 bis 25 Kohlenstoffatome enthält, um die Oberfläche der Magnesiumhydroxidteilchen zu benetzen und zu überziehen.

2. Verfahren nach Anspruch 1, wobei die Oberfläche des Magnesiumhydroxids 20 bis 50 m$^2$/g beträgt.

3. Verfahren nach Anspruch 1 oder 2, wobei das Magnesiumhydroxid eine Kristallitgröße von 100 bis 400 Å aufweist.

4. Verfahren nach einem der Ansprüche 1 bis 3, wobei die Kristallite primäre Teilchen mit einer mittleren Größe von 0,8 bis 5 $\mu$m bilden.

5. Verfahren nach einem der Ansprüche 1 bis 4, wobei das Gemisch auf eine Temperatur im Bereich von 50 bis 200 °C erhitzt wird.

6. Verfahren nach einem der vorangehenden Ansprüche, wobei der prozentuale Gewichtsanteil des Salzes oder Amids, das den Überzug bildet, 5 bis 15 Gew.-%, bezogen auf das Gewicht des Magnesiumhydroxids, ausmacht.

7. Verfahren nach einem der vorangehenden Ansprüche, wobei die organische Säure Stearin-, Laurin- oder Palmitinsäure ist.

8. Flammbeständige Kunststoffmasse mit unterdrückter Rauchentwicklung, umfassend ein Polyolefin oder ein Polyamid mit darin dispergiert Magnesiumhydroxid mit einer Kristallitgröße von weniger als 500 Å (gemessen durch Röntgenlinien-Verbreiterung), wobei die Kristallite primäre Teilchen mit einer mittleren Größe von 0,5 bis 10 $\mu$m bilden, und deren Oberfläche mehr als 10 m$^2$/g beträgt und wobei die primären Teilchen benetzt und überzogen sind mit einem Salz oder einem Amid einer organischen Säure, wobei die organische Säure 6 bis 25 Kohlenstoffatome enthält.

9. Flammbeständige Kunststoffmasse mit unterdrückter Rauchentwicklung, umfassend ein Polyolefin oder ein Polyamid, in dem primäre Teilchen aus Magnesiumhydroxid dispergiert sind, die hergestellt worden sind nach einem Verfahren nach einem der Ansprüche 1 bis 8.

10. Kunststoffmasse nach Anspruch 8 oder 9, wobei der prozentuale Gewichtsanteil des Magnesiumhydroxids in der Kunststoffmasse, bezogen auf das Gesamtgewicht der Masse, 5 bis 70 % beträgt.

**11.** Kunststoffmasse nach Anspruch 10, wobei der prozentuale Gewichtsanteil an Magnesiumhydroxid 50 bis 70 % beträgt.